(19) Europäisches Patentamt
European Patent Office
Office européen des brevets

(11) **EP 1 770 990 A1**

(12) **EUROPEAN PATENT APPLICATION**
published in accordance with Art. 158(3) EPC

(43) Date of publication:
**04.04.2007 Bulletin 2007/14**

(51) Int Cl.:
***H04N 5/335*** (2006.01)

(21) Application number: **05748598.9**

(86) International application number:
**PCT/JP2005/010384**

(22) Date of filing: **07.06.2005**

(87) International publication number:
**WO 2006/008880 (26.01.2006 Gazette 2006/04)**

(84) Designated Contracting States:
**DE FR NL**

(30) Priority: **20.07.2004 JP 2004212183**

(71) Applicant: **MATSUSHITA ELECTRIC INDUSTRIAL CO., LTD.**
**Kadoma-shi, Osaka 571-8501 (JP)**

(72) Inventor: **YONEMOTO, Kazuya**
**c/o Matsushita El. Ind. Co., Ltd.**
**Chuo-ku, Osaka-shi, Osaka 540-6319 (JP)**

(74) Representative: **Pautex Schneider, Nicole Véronique et al**
**Novagraaf International SA**
**25, Avenue du Pailly**
**1220 Les Avanchets - Geneva (CH)**

(54) **SOLID-STATE IMAGE PICKUP DEVICE AND SAMPLING CIRCUIT**

(57) To provide a solid-state image pickup device which prevents the generation of fixed pattern noise having a correlation in a column direction (or a row direction) caused by non-uniformity of a sampling circuit itself. The solid-state image pickup device includes a sampling circuit for sampling a signal from a photodiode. The sampling circuit includes: a clamp capacitor $C_{CL}$ for transmitting only an AC component of the signal; a sampling capacitor $C_{SH}$ for holding the signal transmitted via the clamp capacitor $C_{CL}$; and a sampling MOS switch M12 for transmitting the signal to the sampling capacitor $C_{SH}$ or blocking the transmission. A ratio between the clamp capacitor $C_{CL}$ capacity and the sampling capacitor $C_{SH}$ capacity is a fixed value determined by a capacity unique to the sampling MOS switch M12.

FIG. 1

EP 1 770 990 A1

**Description**

**Technical Field**

The present invention relates to a solid-state image pickup device which is suitable for an image input device such as a video camera and a digital still camera, and in particular to a sampling circuit which reads out a signal from a MOS image pickup device or a CMOS image pickup device.

**Background Art**

With the widespread use of image input devices such as video cameras and digital still cameras, various types of solid-state image pickup devices have been proposed (for example, refer to Patent Reference 1).

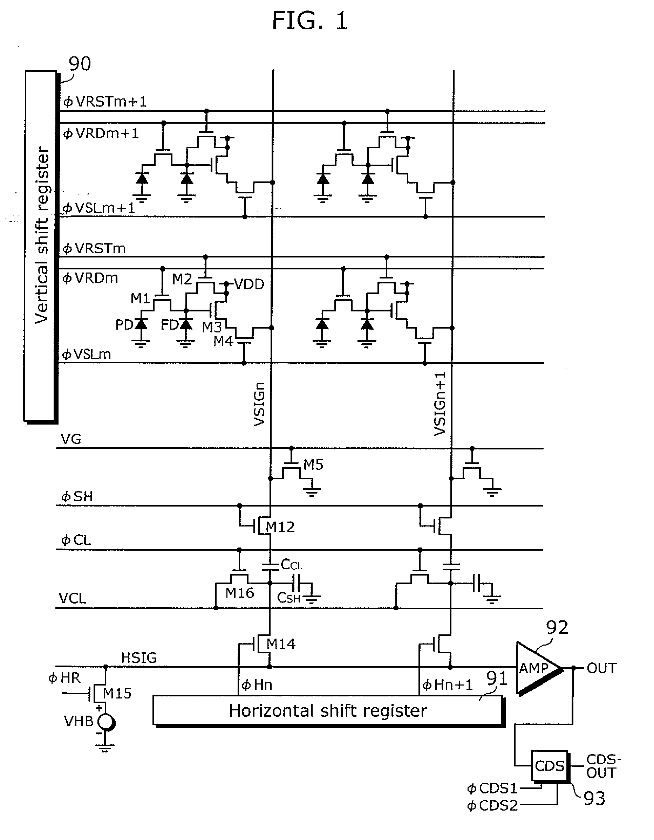

FIG. 1 is a circuit diagram of a conventional solid-state image pickup device. A unit pixel (photodiode) includes: a photodiode PD; a read-out MOS transistor M1; a floating diffusion FD; a reset MOS switch M2; an amplified MOS switch M3; and a row-selecting MOS switch M4, and a vertical shift register 90 controls the operation in the pixel per row. A Correlated Double Sampling circuit (hereinafter referred to as CDS circuit) which includes a sampling MOS switch M12, a clamp capacitor $C_{CL}$, a sampling capacitor $C_{SH}$ and a clamp MOS switch M16 is connected to each of column signal lines VSIGn and VSIGn+1. A pixel signal having a fixed pattern noise suppressed in the CDS circuit is outputted to a horizontal signal line HSIG, via a column-selecting MOS switch M14 controlled by a horizontal shift register 91, so as to be outputted as an image signal, via an amplifier circuit AMP92 and a CDS93. Here, a VHB application circuit, is connected to the horizontal signal line HSIG. The VHB application circuit (a horizontal signal line reset MOS switch M15 and a constant voltage source VHB) is for applying a bias voltage VHB synchronized with a horizontal signal line reset pulse ΦHR to the horizontal signal line HSIG.

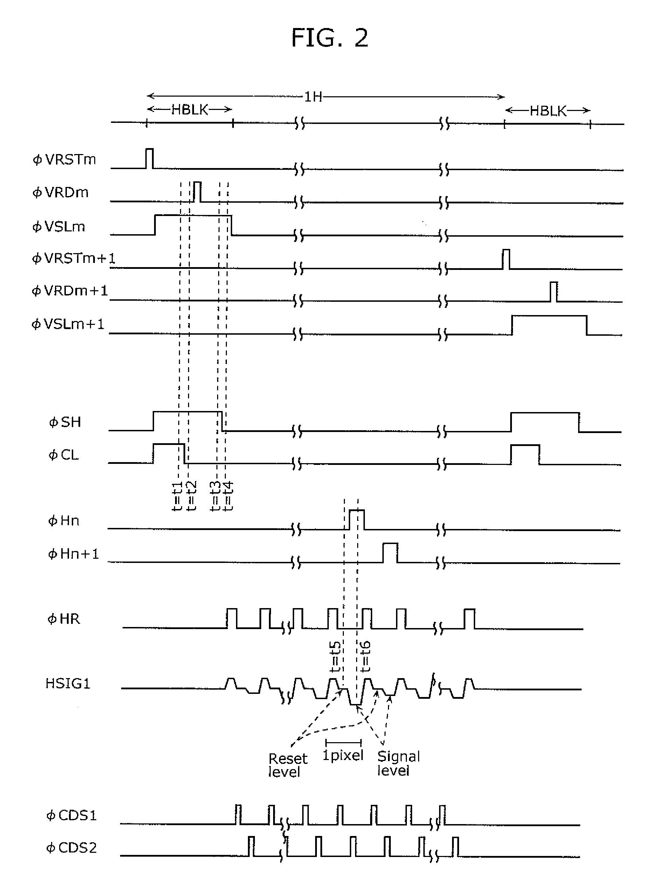

FIG. 2 is a timing chart showing operations of the conventional solid-state image pickup device as shown in FIG. I. The detailed operation of the unit pixel is as follows. As shown in FIG. 2, during a certain horizontal blanking period HBLK, in the pixel row of the corresponding horizontal scanning line (for example, mth row), first, the floating diffusion FD is reset to a supply voltage VDD, using a row-resetting pulse ΦVRSTm outputted from the vertical shift register 90. Immediately, a row-selecting pulse ΦVSLm is raised so that the reset level of the pixel, of which floating diffusion FD is in the reset state, is outputted to the column signal line VSIGn.

In the CDS circuit connected to the column signal line VSIGn, the reset level of this pixel is sampled. This operation is the first sampling operation (hereinafter referred to as clamping). In the clamping, while (i) via the sampling MOS switch M12, the reset level of the pixel (the first pixel signal) is provided to the first electrode of the clamp capacitor $C_{CL}$ (the electrode connected to the sampling MOS switch M12), and (ii) via the clamp MOS switch M16, a clamp voltage VCL is applied to the second electrode of the clamp capacitor $C_{CL}$ (the electrode connected to the clamp MOS switch M16), a clamp pulse ΦCL applied to a control electrode (hereinafter referred to as a gate electrode) of the clamp MOS switch M16 is lowered, so as to hold the clamp voltage VCL at the node between the clamp capacitor $C_{CL}$ and the sampling capacitor $C_{SH}$ (from t=t1 to t=t2).

Then, a row read-out pulse ΦVRDm rises in the middle of the same horizontal blanking period HBLK, and a signal charge is transferred from the photodiode PD to the floating diffusion FD. Since the change associated with the signal charge appears as a signal level (the second pixel signal) in the column signal line VSIGn, this signal level is subjected to a second sampling operation (hereinafter referred to as sampling) in the CDS circuit. In this sampling, by making a sample pulse ΦSH is lowered, the voltage change (difference between the signal level and the reset level) in the column signal line VSIGn is held at the node between the clamp capacitor $C_{CL}$ and the sampling capacitor $C_{SH}$ (from t=t3 to t=t4). Here, the voltage held at the node has the value which has changed, from the clamp voltage VCL, based on the capacity ratio between the clamp capacitor $C_{CL}$ and the sampling capacitor $C_{SH}$ that is the difference between the signal level and the reset level. Thus, the disparity between the threshold voltages of the amplified MOS switch M3 in the unit pixel is subtracted, and the fixed pattern noise of the pixel is suppressed.

The held voltage as described above sequentially appears per column in the horizontal signal line HSIG, via the column-selecting MOS switch M14 controlled by the horizontal shift register 91 (from t=t5 to t=t6). Here, due to the capacity ratio between the sampling capacitor $C_{SH}$ and the capacity $C_H$ of the horizontal signal line HISG, the voltage of the horizontal signal line HSIG changes, and the changed voltage is outputted as a pixel signal.

Patent Reference 1: Japanese Laid-Open Patent Application No. 10-173997

**Disclosure of Invention**

**Problems that Invention is to Solve**

However, in the conventional sampling circuit as described above, there is a problem that fixed pattern noise is generated, due to the disparity between the threshold voltages (disparities among each column signal) of the MOS switch included in the CDS circuit connected to each column signal line.

The predominant mechanism in which a disparity occur in the respective sampling voltages in each of a plurality of sampling circuits, is as follows.

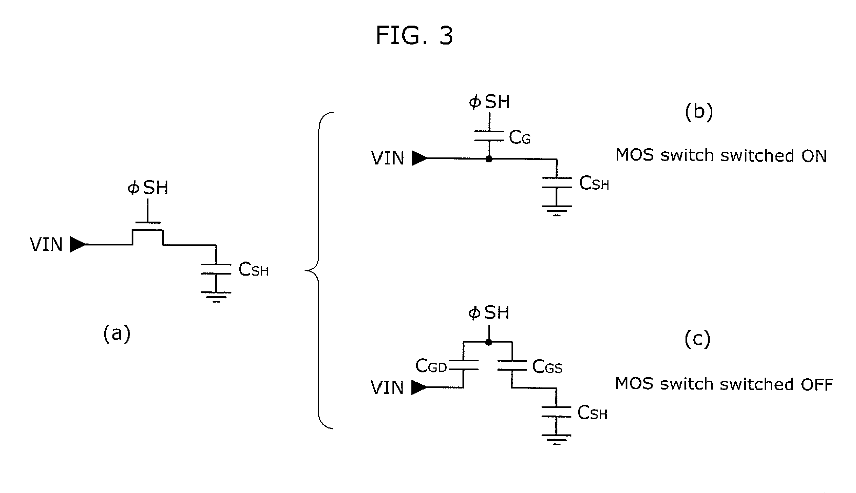

The sampling circuit, as shown in FIG. 3 (a), basically includes the MOS switch and the capacitor $C_{SH}$, and operates by changing a gate voltage ΦSH so that the MOS switch changes from ON to OFF. Such equivalent circuit becomes a circuit as shown in FIG. 3(b) when the MOS switch is ON, and a circuit as shown in FIG. 3 (c) when the MOS switch is OFF. As shown in the equivalent circuit in FIG. 3 (a), when the MOS switch is ON, an input signal VIN and the sampling capacitor $C_{SH}$ are in the conduction state in which a sampling pulse ΦSH is capacitively coupled with a gate capacitance $C_G$ of the MOS switch. Here, the gate capacitance $C_G$ has a total sum of a gate-source capacity $C_{GS}$, a gate-drain capacity $C_{GD}$ and a gate oxide film (between channels) capacity $C_{GO}$ at the time when the MOS switch is in the operation point of the linear area. On the other hand, as shown in the equivalent circuit of FIG. 3 (c), as the capacity model changes when the MOS switch is OFF, the input signal VIN is capacitively coupled with the sampling pulse ΦSH via the gate-drain capacity $C_{GD}$; the sampling capacitor $C_{SH}$ is capacitively connected to the sampling pulse ΦSH via the gate-source capacity $C_{GS}$; and the input signal VIN and the sampling capacitor $C_{SH}$ are in the non-conduction state.

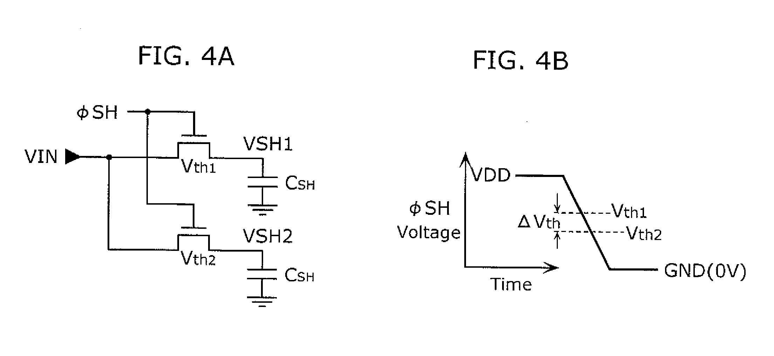

Using the capacitance model of the MOS switch as described above, as shown in FIG. 4A, in the case where two same sampling circuits are structured by a MOS switch which has different threshold voltages $V_{th1}$ and $V_{th2}$, due to the difference (disparity) $\Delta V_{th}$ between the threshold voltages as shown in FIG. 4B, the difference (disparity) ΔSH between the sampled voltages occurs, as shown in the following Equations.

[Equation 1]

$$VSH1 = VIN - \frac{C_{GS}}{(C_{SH} + C_{GS})} V_{th1}$$

$$VSH2 = VIN - \frac{C_{GS}}{(C_{SH} + C_{GS})} V_{th2}$$

$$\Delta VSH = VSH1 - VSH2 = \frac{C_{GS}}{(C_{SH} + C_{GS})} \Delta V_{th}$$

According to the above-mentioned mechanism, in the conventional solid-state image pickup device as shown in FIG. 1, disparities occur in the following operation phase. (Clamp phase; from t=t1 to t=t2 in FIG. 2)

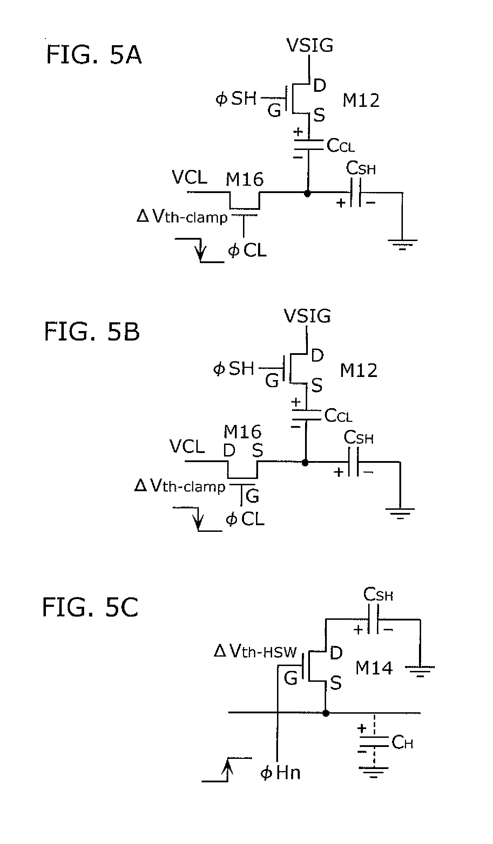

FIG. 5A is a circuit diagram showing only the part related to the clamp phase in the conventional circuit, regarding the phase that is, the operation of sampling the first pixel signal. It is assumed that the threshold value disparity in the clamp MOS switch M16 to which a clamp pulse ΦCL is applied is $\Delta_{Vth-clamp}$; the gate-source capacity of the clamp MOS switch M16 is $C_{GS}$; the capacity of the sampling capacitor is $C_{SH}$; and the capacity of the clamp capacitor is $C_{CL}$. Here, the disparity in the electric charge $\Delta Q_{CSH-clamp}$ (electric charge obtained through conversion from the threshold disparity) accumulated in the sampling capacitor is shown in the following Equation.

[Equation 2]

$$\Delta Q_{C_{SH}-clamp} = - \frac{C_{SH} C_{GS}}{C_{SH} + C_{CL} + C_{GS}} \Delta V_{th-clamp}$$

(Sampling phase; from t=t3 to t=t4 in FIG. 2)

FIG. 5B is a circuit diagram showing only the part related to the sampling phase in the conventional circuit, regarding the phase, that is, the operation in which the second pixel signal is sampled. It is assumed that the threshold disparity in the sampling MOS switch M12 in which the sample pulse $\Phi$SH is applied is $\Delta_{Vth\text{-}sample}$; the gate-source capacity of the MOS switch is $C_{GS}$; the capacity of the sampling capacitor is $C_{SH}$; and the capacity of the clamp capacitor is $C_{CL}$. Here, the disparity in the electric charge $\Delta Q_{CSH\text{-}sample}$ accumulated in the sampling capacitor is shown in the following Equation.

$$[\text{Equation 3}]$$

$$\Delta Q_{C_{SH}\text{-}sample} = - \frac{\dfrac{C_{SH}C_{CL}}{C_{SH}+C_{CL}}C_{GS}}{\dfrac{C_{SH}C_{CL}}{C_{SH}+C_{CL}}+C_{GS}} \Delta V_{th\text{-}sample}$$

(Horizontal output phase; from t=t5 to t=t6 in FIG. 2)

FIG. 5C is a circuit diagram showing only the part related to the horizontal output phase in the conventional circuit, regarding the phase, that is, the operation in which the signal voltage stored in the sampling capacitor is outputted to the horizontal signal line. It is assumed that the threshold value disparity in the column-selecting MOS switch M14, in which the column-selecting pulse $\Phi$Hn is applied, is $\Delta V_{th\text{-}HSW}$; the gate-source capacity of the MOS switch is $C_{GS}$; the gate-drain capacity is $C_{GD}$; and the total sum of the $C_{GS}$, $C_{GD}$ and the capacity of the gate oxide film is $C_G$. Here, the disparity in the electric charge quantity $\Delta Q_{CSHCH\text{-}Hout}$ which appears in the horizontal signal line that has the sampling capacitor and the horizontal signal line capacity $C_H$ is shown in the following Equation.

$$[\text{Equation 4}]$$

$$\Delta Q_{C_{SH}C_{H}\text{-}Hout} = \left( \frac{C_{SH}C_{GS}}{C_{SH}+C_{GS}} + \frac{C_{H}C_{GD}}{C_{H}+C_{GD}} - \frac{(C_{SH}+C_{H})C_{G}}{C_{SH}+C_{H}+C_{G}} \right) \Delta V_{th\text{-}HSW}$$

In the three phases, due to the threshold value disparity in the individually independent MOS switch, the electric charge disparity occurs. Thus, the disparities occurring in all of the phases are added, and become a longitudinal fixed pattern noise. If such longitudinal fixed pattern noise is converted into the disparities in signal voltages appearing in the horizontal signal line, the value is shown in the following Equation.

$$[\text{Equation 5}]$$

$$\Delta V = \frac{1}{C_{SH}+C_{H}} \left( \Delta Q_{C_{SH}\text{-}clamp} + \Delta Q_{C_{SH}\text{-}sample} + \Delta Q_{C_{SH}C_{H}\text{-}Hout} \right)$$

In other words, even with the same input signal, a different voltage is generated for each column, due to the disparities between the threshold voltages among the clamp MOS switch M16, the sampling MOS switch M12 and the column-selecting MOS switch M14 included in the CDS circuit connected to each column signal (non-uniformity among each CDS circuit). This result shows that the longitudinal fixed pattern noise cannot be suppressed in the conventional circuit configuration unless the threshold value disparities in the MOS switch are removed.

An object of the present invention is to provide a solid-state image pickup device and the like which prevents a fixed pattern noise that has a correlation in a column direction (or a row direction) caused by non-uniformity of a sampling circuit itself.

**Means to Solve the Problems**

In order to achieve the above-mentioned object, the solid-state image pickup device according to the present invention includes a sampling circuit for sampling a signal from a photodiode. The sampling circuit includes: a clamp capacitor which is a capacitor for transmitting only an AC component of the signal, a sampling capacitor which is a capacitor for holding the signal transmitted via the clamp capacitor; a sampling MOS switch which is a MOS transistor for transmitting the signal to the sampling capacitor or blocking the transmission. The relation between the capacity of the clamp capacitor and the capacity of the sampling capacitor is determined by the capacity unique to the sampling MOS switch.

For example, in the case where the sampling MOS switch is connected in series between the clamp capacitor and the sampling capacitor, the ratio between the capacity of the sampling capacitor and the capacity of the clamp capacitor is a fixed value determined by the capacity unique to the sampling MOS switch. In the case where the clamp capacitor is connected in series between the sampling MOS switch and the sampling capacitor, the ratio between (i) the total capacity in the series connection between the sampling capacitor and the clamp capacitor, and (ii) the capacity of the column signal line which transmits the signal is a fixed value determined by the capacity unique to the sampling MOS switch. The fixed value is approximately equivalent to the ratio between the gate-source capacity and gate capacity of the sampling MOS switch.

Thus, in a plurality of sampling circuits, even if there are disparities between the threshold voltages which are applied to the sampling MOS switches, the electric charge flowing into the sampling capacitors are not affected by the disparities. Thereby, the signal disparities are prevented in the sampling phase. Accordingly, the fixed pattern noise that has a column-direction (or a row-direction) correlation caused by non-uniformity of the sampling circuit itself is prevented.

Here, the sampling circuit may further include: a column-selecting MOS switch which is a MOS switch for turning ON or OFF the connection between the sampling capacitor and an output line; and the bias voltage application circuit for applying the bias voltage to the output line. The bias voltage application circuit may change a bias voltage applied to the output line in synchronization with a control signal which turns the column-selecting MOS switch from ON to OFF. For example, in the bias voltage application circuit, the bias voltage is changed based on the proportional coefficient that is the value determined by (i) the capacity of the sampling capacitor, (ii) the capacity of the clamp capacitor, (iii) the capacity between the output line and a reference potential, and (iv) the capacity unique to the column-selecting MOS switch.

Accordingly, since the bias voltage applied to the output line is modulated in synchronization with the clamp pulse, the signal disparities are prevented in the clamping phase, and the fixed pattern noise that has a column-direction (or a row-direction) correlation caused by non-uniformity of a sampling circuit itself is prevented.

Furthermore, in order to achieve the above-mentioned object, the solid-state image pickup device according to the present invention includes the sampling circuit for sampling a signal from a photodiode. The solid-state image pickup device includes two of the sampling circuits per a column of photodiodes, and the two sampling circuits are connected to each other in parallel so that a column signal line, which transmits a signal from the column of photodiodes, is a common input. The sampling circuit includes a sampling capacitor which is a capacitor for holding the signal, and a sampling MOS switch which is a MOS transistor for transmitting the signal to the sampling capacitor or blocking the transmission. The ratio between the capacity of the sampling capacitor and the capacity of the column signal line is a fixed value determined by a capacity unique to the sampling MOS switch. The fixed value is approximately equivalent to the ratio between the gate source capacity and the gate capacity of the sampling MOS switch. Thereby, in the method in which two sampling circuits are used for one column signal line (or row signal line), that is, in the sampling method that differs from the correlated double sampling, the fixed pattern noise that has a column-direction (or a row-direction) correlation caused by non-uniformity of the sampling circuit itself is prevented.

The sampling circuit may further include a column-selecting MOS switch which is a MOS switch for turning ON or OFF a connection between the sampling capacitor and the output line. When the signal held in the sampling capacitor is outputted to the output line, the column-selecting MOS switch may be brought into a conduction state from a non-conduction state, then brought into the non-conduction state again. Accordingly, the fixed pattern noise generating from the column-selecting MOS switch is removed.

The present invention can realize not only the solid-state image pickup device, but also a sampling circuit unit which the solid-state image pickup device includes. As long as the sampling circuit uses the MOS switch and the sampling capacitor, the sampling circuit is used not only for the solid-state image pickup device, but also applied as the sampling circuit for other devices.

**Effects of the Invention**

According to the present invention, in the MOS or CMOS imaging device including a column sampling circuit, the longitudinal fixed pattern noise which collaterally occurs from the column sampling circuit (or row sampling circuit) connected to each column signal line (or each horizontal signal line) is effectively removed.

Furthermore, in the solid-state image pickup device which uses a column CDS circuit according to the conventional method, the longitudinal fixed pattern noise cannot be reduced unless the sampling capacitor or the clamp capacitor is enlarged so as not to be affected by the capacity of each unit held by the MOS switch. In contrast, in the present invention, as long as the capacity of the sampling capacitor, the capacity of the clamp capacitor and the like have a fixed relation, the minimum necessary capacity of the sampling capacitor, the clamp capacitor and the like is used. Thus, the solid-state image pickup device is downsized.

**Brief Description of Drawings**

[FIG. 1] FIG. 1 is a circuit diagram of a conventional solid-state image pickup device.

[FIG. 2] FIG. 2 is a timing chart showing operations of a conventional solid-state image pickup device.

[FIG. 3] FIG. 3 is a diagram showing a conventional sampling circuit. [FIG. 4A and 4B] FIG. 4A and 4B each is a diagram showing the mechanism in which disparities occur in sampling voltages in a plurality of conventional sampling circuits.

[FIG. 5A to 5C] FIG. 5A to 5C each is a diagram showing each operational phase in a conventional sampling circuit.

[FIG. 6] FIG. 6 is a circuit diagram of the solid-state image pickup device in a first embodiment of the present invention.

[FIG. 7] FIG. 7 is a timing chart showing operations of the solid-state image pickup device.

[FIG. 8A to 8D] FIG. 8A to 8D each is a diagram showing a sampling circuit of the solid-state image pickup device.

[FIG. 9A and 9B] FIG. 9A and 9B each is a diagram showing the operation in the clamp phase in the sampling circuit.

[FIG. 10A and 10B] FIG. 10A and 10B each is a diagram showing the operation in the horizontal output phase in the sampling circuit.

[FIG. 11] FIG. 11 is a circuit diagram of the solid-state image pickup device in a second embodiment of the present invention.

[FIG. 12] FIG. 12 is a timing chart showing operations of the solid-state image pickup device.

[FIG. 13] FIG. 13 is a circuit diagram of the solid-state image pickup device in a third embodiment of the present invention.

[FIG. 14] FIG. 14 is a timing chart showing operations of the solid-state image pickup device.

**Numerical References**

| | |
|---|---|
| PD | Photodiode |
| FD | Floating diffusion |
| M1 | Read-out MOS transistor |
| M2 | Reset MOS switch |
| M3 | Amplified MOS switch |
| M4 | Row-selecting MOS switch |
| M5 | Load MOS transistor |
| M6, M7, M12 | Sampling MOS switch |
| M8, M9, M14 | Column-selecting MOS switch |
| M10, M11, M15 | Horizontal signal line reset MOS switch |
| $C_{SH}$, $C_{SH1}$, $C_{SH2}$ | Sampling capacitor |
| $C_{CL}$ | Clamp capacitor |
| R1, R2 | Resistor |
| $V_0$ | Constant voltage source |
| G1, G2 | MOS switch having a gate |

**Best Mode for Carrying Out the Invention**

Embodiments of the present invention will be specifically described in reference to the drawings as follows.

(First Embodiment)

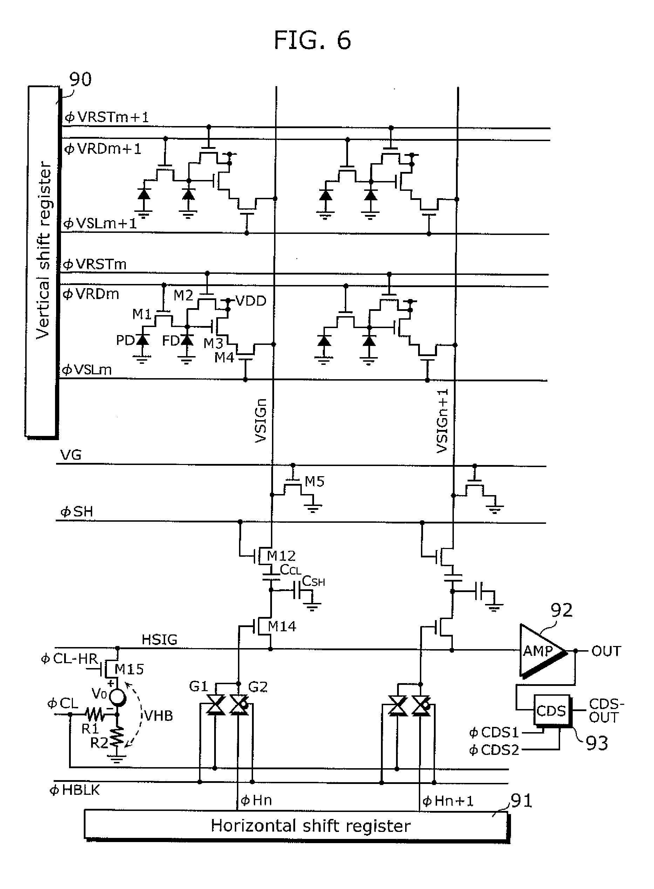

FIG. 6 is a circuit diagram of the solid-state image pickup device according to a first embodiment of the present invention. Compared to the conventional circuit as shown in FIG. 1, the characteristic features which have been changed include: the connection of a CDS circuit (column CDS circuit) connected to each of column signal lines VSIGn and VSIGn+1; and the device structure of the column CDS circuit. The column CDS circuit includes: a clamp capacitor $C_{CL}$; a sampling MOS switch M12; a sampling capacitor $C_{SH}$; a column-selecting MOS switch M14; a VHB modulation circuit (including: a horizontal signal line reset MOS switch M15; a constant voltage source V0; resistors R1 and R2) which applies, to a horizontal signal line HSIG, a bias voltage VHB synchronized with a clamp pulse ΦCL; and a control gate circuit (including MOS switches G1 and G2 with a gate) for the column-selecting MOS switch M14.

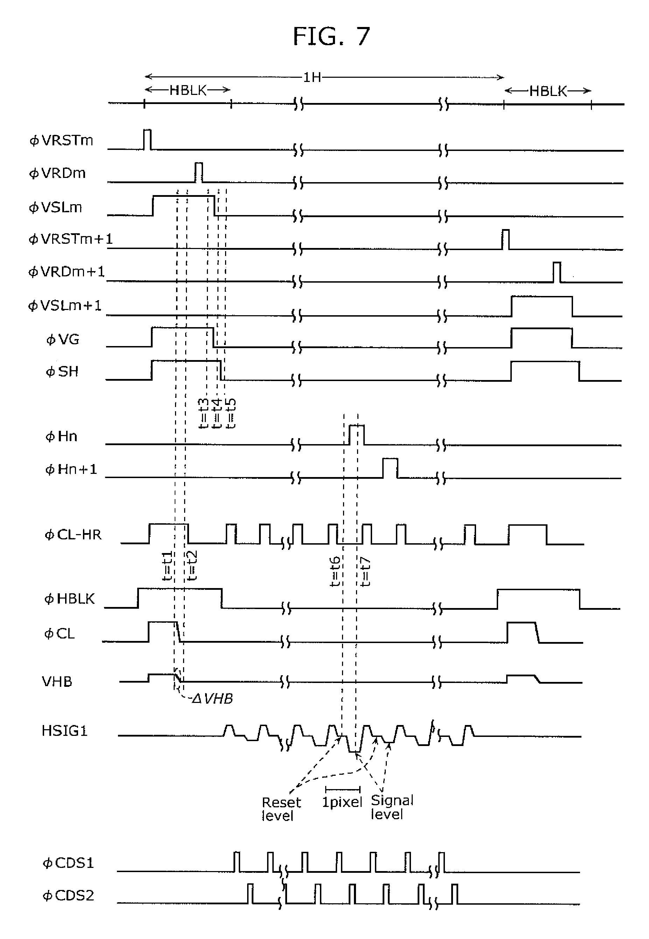

FIG. 7 is a timing chart showing operations of the solid-state image pickup device as shown in FIG. 6. The operation in the pixels of the mth row is as follows. First, at the beginning of the horizontal blanking period HBLK, a row reset pulse ΦVRSTm is generated from a vertical shift register 90. In the pixels of the mth row, a floating diffusion FD which converts, into a signal voltage, a signal charge that has been photoelectrically converted by a photodiode PD, is reset to a source voltage VDD.

Next, in the clamp phase (t≦t1), a row-selecting pulse ΦVSLm, a sample pulse ΦSH, a clamp pulse ΦCL, a clamp and horizontal signal line reset pulse ΦCL-HR rise. Here, the first pixel signal which has reset the floating diffusion FD is outputted from the pixels of the mth row to each of column signal lines (VSIG1,...,VSIGn,...VSIGN). Under the state where the voltage of the column signal line VSIGn is the first pixel signal, a bias voltage VHB is applied to the electrode on the side of the sampling MOS switch M12 of the sampling capacitor $C_{SH}$. Here, the value of the bias voltage VHB is the total sum of (i) the voltage of the clamp pulse ΦCL in High state, divided by the resistors R1 and R2, and (ii) a constant voltage V0.

After that, the clamp pulse ΦCL falls and this clamp pulse turns OFF the column-selecting MOS switch M14, via the MOS switch G1 having a gate. Thus, the sampling capacitor $C_{SH}$ is clamped to the bias voltage VHB (from t=t1 to t=t2). Here, the bias voltage VHB, in synchronization with the fall of the clamp pulse ΦCL, decreases by a constant voltage (determined by the voltage of the clamp pulse ΦCL and the resistors R1 and R2). If it is not necessary to apply the bias voltage VHB to the sampling capacitor $C_{SH}$, the clamp phase is completed by lowering the clamping and horizontal signal line reset pulse ΦDCL-HR.

Next, before the sampling phase, in order to transfer, to the floating diffusion FD, the signal charge which has been photoelectrically converted by the photodiode PD, a column read-out pulse ΦVRDm is generated from the vertical shift register 90. Then, the electric potential of the floating diffusion FD changes according to the amount of the signal charge that have been photoelectrically converted by the photodiode PD, and the second pixel signal is outputted from the pixels of the mth row.

Subsequently, in the sampling phase, since the second pixel signal is already outputted to the column signal line VSIGn, the difference between the first and second pixel signals based on the bias voltage VHB, that is, the voltage depending on only the charge quantity of the photoelectric conversion, from which the disparity (fixed pattern noise of the pixel) of the amplified MOS switch M3 in the pixel is subtracted, appears in the electrode on the side of the sampling MOS switch M12 of the sampling capacitor $C_{SH}$ due to the capacitive coupling via the clamp capacitor $C_{CL}$ and the sampling MOS switch M12. In the sampling phase (from t=t4 to t=t5), the operation for lowering the sample pulse ΦSH is executed, so that the sampling capacitor $C_{SH}$ holds the signal, and the phase is completed.

From the operation for resetting the floating diffusion FD of the pixel, the sampling phase is executed during the horizontal blanking period HBLK. After that, during the horizontal video period, in the horizontal outputting phase (from t=t6 to t=t7), the pixel signals held in the sampling capacitor $C_{SH}$ appear in the horizontal signal line HSIG sequentially from the first pixel in the mth row, due to the column-selecting pulse ΦHn sequentially generated in horizontal direction from the horizontal shift register 91. Since the horizontal signal line HSIG needs to be reset before each pixel signal appears. Thus, the clamping and horizontal signal line reset pulse ΦCL-HR is generated at the beginning of one pixel period. In the latter half of the one pixel period, (i) the column-selecting pulse ΦHn is generated, (ii) the pixel signal held in the sampling capacitor $C_{SH}$ is outputted to the horizontal signal line HSIG, (iii) the voltage change during the one pixel period is detected in the CDS circuit 93 connected to the output of the amplifier circuit AMP 92, so as to be outputted as a pixel signal. The control gate circuit (including the MOS switches G1 and G2 with a gate) for the column-selecting MOS switch M14 switches the operations so that the column-selecting MOS switch M14 is controlled (i) by the clamp pulse ΦCL during the horizontal blanking period HBLK, and (ii) by the column-selecting pulse ΦHn during the horizontal video period.

Next, in the solid-state image pickup device of this embodiment, the mechanism, in which fixed pattern noise does not occur in individual column CDS circuit connected to each column, will be described.

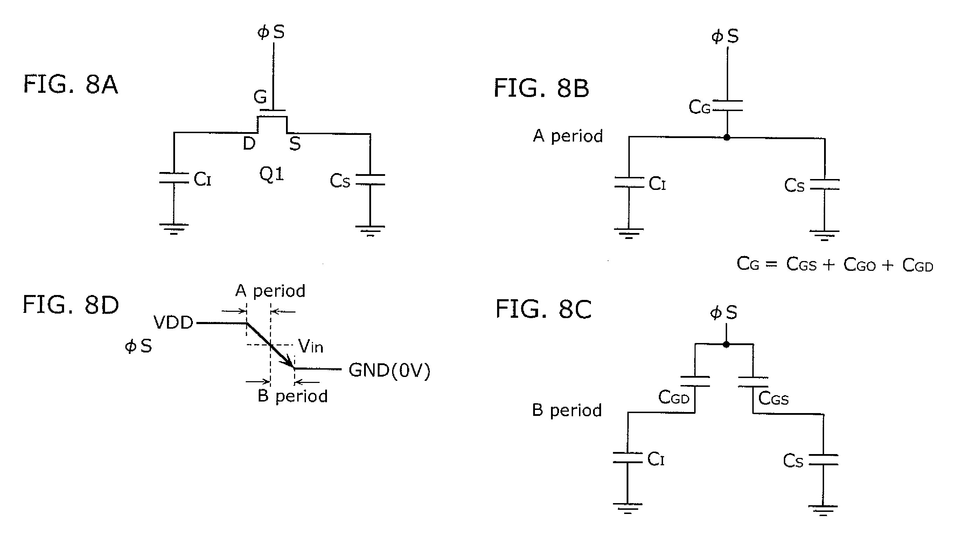

FIG. 8A to 8D are circuit diagrams for explaining the mechanism. FIG. 8A shows a sampling circuit according to this embodiment. Here, a capacitative signal source called $C_I$ is included in the input signal side, and connected to the drain of the sampling MOS switch Q1.

A sampling capacitor $C_S$ is connected to the source side of the sampling MOS switch Q1. Here, by keeping a fixed value of ratio between the signal source capacity $C_I$ and the sampling capacitor $C_S$, even if there are disparities in the threshold values of the MOS switches in a plurality of sampling circuits, the disparities in the voltages to be sampled are prevented from occurring.

FIG. 8B and FIG. 8C show an equivalent circuit (capacitor model) with the sampling MOS switch Q1 which is ON and OFF respectively. The gate capacitor $C_G$ has a total sum of a gate-source capacity $C_{GS}$, a gate-drain capacity $C_{GD}$ and a gate oxide film capacity $C_{GO}$, as shown in the following Equation.

$$C_G = C_{GS} + C_{GD} + C_{GO}$$

As shown in FIG. 8D, assuming that (i) the time spent when the sampling pulse ΦS reaches from the source voltage VDD to the threshold value $V_{th}$ of the sampling MOS switch Q1 is A period, and (ii) the time spent when the sampling pulse ΦS further reaches from the threshold value $V_{th}$ to GND is B period, in the A period, the sampling circuit becomes the equivalent circuit as shown in FIG. 8B, and in the B period, the sampling circuit becomes the equivalent circuit as shown in FIG. 8C. According to the equivalent circuits, in each of the A period and the B period, the electric charge quantities $Q_{CS-A}(V_{th})$ and $Q_{CS-B}(V_{th})$ flowing into the sampling capacitor $C_S$ are shown in the following Equation.

[Equation 6]

$$Q_{C_S\text{-}A}\left(V_{th}\right) = \frac{C_S C_G}{C_S + C_I + C_G}\left(\Delta V_{th} - VDD\right)$$

$$Q_{C_S\text{-}B}\left(V_{th}\right) = \frac{C_S C_{GS}}{C_S + C_{GS}}\left(0 - V_{th}\right)$$

As a result, in the sampling capacitor $C_S$ of the two sampling circuits structured by the sampling MOS switches which have different threshold values ($V_{th1}$ and $V_{th2}$), the total sum of (i) the electric charge quantity difference $\Delta Q_{CS}$ (the electric charge quantity difference ($Q_A(V_{th1}) - Q_A(V_{th2})$) in the A period and (ii) the electric charge quantity difference ($Q_B(V_{th1}) - Q_A(V_{th2})$) in the B period is shown in the following Equation.

[Equation 7]

$$\Delta Q_{C_S} = Q_A\left(V_{th1}\right) - Q_A\left(V_{th2}\right) + Q_B\left(V_{th1}\right) - Q_B\left(V_{th2}\right)$$

$$= \left\{\frac{C_S C_G}{C_S + C_I + C_G} - \frac{C_S C_{GS}}{C_S + C_{GS}}\right\}\Delta V_{th}$$

According to (i) a conditional Equation for making the electric charge quantity difference $\Delta Q_{CS}$ equal to zero, and (ii) the relational Equation of the gate capacitor $C_G$, the following Equation is satisfied.

## [Equation 8]

$$\frac{C_S}{C_I} = \frac{C_{GS}}{C_{GO}+C_{GD}}$$

As described above, by keeping a fixed value of ratio between the signal source capacity $C_I$ and the sampling capacitor $C_S$, the electric charge quantity difference $\Delta Q_{CS}$ becomes zero, thus the difference between the voltages sampled in the two sampling circuits is cancelled.

By applying this relational Equation to this embodiment, the ratio of the capacitance values of the clamp capacitor $C_{CL}$ and the sampling capacitor $C_{SH}$ as shown in FIG. 6 is determined.

In other words, to remove the fixed pattern noise generated in the sampling phase (from t=t4 to t=t5), the ratio of the capacitance values of the clamp capacitor $C_{CL}$ and the sampling capacitor $C_{SH}$ as shown in FIG. 6, is shown in the following Equation.

## [Equation 9]

$$\frac{C_{SH}}{C_{CL}} = \frac{C_{GS}}{C_{GO}+C_{GD}}$$

In addition, $C_G$, $C_{GS}$, $C_{GD}$ and $C_{GO}$ are respectively a gate capacity, a gate-source capacity, a gate-drain capacity, and a gate oxide film capacity of the sampling MOS switch M12.

On the other hand, since clamping and horizontal output are executed using the same MOS switch (the column-selecting MOS switch M14), in the clamp phase (from t=t1 to t=t2) and in the horizontal output phase (from t=t6 to t=t7), by modulating the bias voltage VHB as the clamp bias, the fixed pattern noise of both phases is removed, so as to be synchronized with the fall of the clamp pulse ΦCL.

The specific condition is to provide the voltage change ΔVHB of the bias voltage VHB as the value shown in the following Equations.

## [Equation 10]

$$\Delta VHB = \alpha \, \frac{C_{GH}}{C_S+C_H+C_{GH}} \, \Delta \phi CL$$

where, the following Equation must be satisfied.

## [Equation 11]

$$\alpha = \frac{C_S + C_H}{C_S}\left(\frac{C_{SH} + C_{CL}}{C_{SH}}C_{GOH} + C_{GSH}\right)\frac{1}{C_{GH}}$$

$$C_S = C_{SH} + C_{CL} + C_G$$
$$C_G = C_{GS} + C_{GO} + C_{GD}$$
$$C_{GH} = C_{GSH} + C_{GOH} + C_{GDH}$$

$C_{GH}$, $C_{GSH}$, $C_{GDH}$ and $C_{GOH}$ are respectively a gate capacity, a gate-source capacity, a gate-drain capacity, and a gate oxide film capacity of the column-selecting MOS switch M14.

In addition, the condition for the resistors R1 and R2 in the VHB modulation circuit is as follows.

## [Equation 12]

$$\frac{R2}{R1+R2} = \alpha\,\frac{C_{GH}}{C_S + C_H + C_{GH}}$$

The derivation method for the voltage change ΔVHB in the clamp phase and the horizontal output phase will be specifically described as follows.

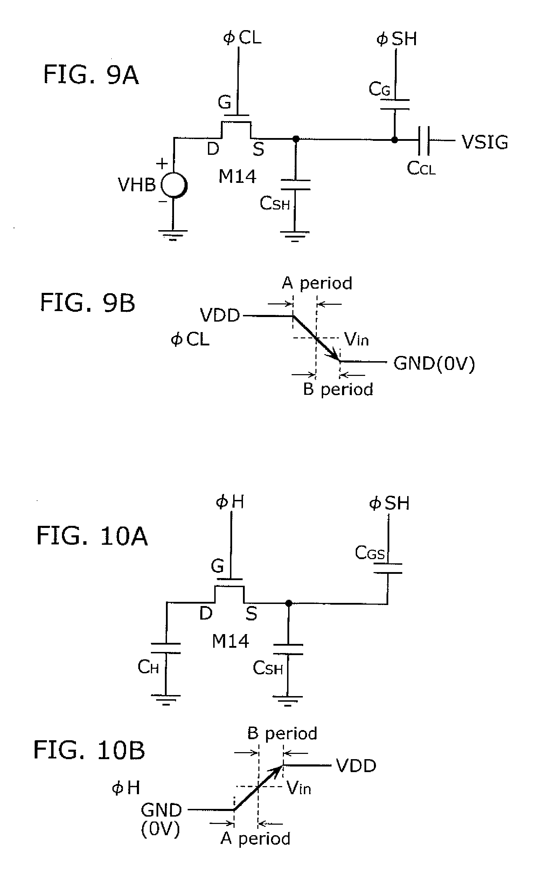

First, the disparities in the electric charge quantity in the clamp phase are considered. FIG. 9A and 9B each is a diagram showing the disparities in the electric charge quantity in the clamp phase. FIG. 9A is a circuit diagram of the part which affects the electric charge quantity flowing into the sampling capacitor $C_{SH}$ in the clamp phase. FIG. 9B is a diagram showing a waveform of the clamp pulse ΦCL in the clamp phase.

In each of the A period and the B period as shown in FIG. 9B, the electric charges flowing into the sampling capacitor $C_{SH}$, $Q_A(V_{th})$ and $Q_B(V_{th})$ are shown in the following Equation.

## [Equation 13]

$$Q_A(V_{th}) = \frac{\alpha\,C_S C_{GH}}{C_S + C_H + C_{GH}}\left(V_{th} - VDD\right)$$

$$Q_B(V_{th}) = \frac{C_S C_{GSH}}{C_S + C_{GSH}}\left(0 - V_{th}\right)$$

$$C_S = C_{SH} + C_{CL} + C_G$$
$$C_G = C_{GS} + C_{GO} + C_{GD}$$
$$C_{GH} = C_{GSH} + C_{GOH} + C_{GDH}$$

However, in order to create the effect that , the horizontal signal line HSIG becomes capacitative (becoming the capacity CI as shown in FIG. 8A),when seen from the column-selecting MOS switch M14, when the clamp pulse ΦCL is inputted, the bias voltage VHB is modulated, in synchronization with the clamp pulse ΦCL from the A period to the B period.

[Equation 14]

$$\Delta VHB = \alpha \frac{C_{GH}}{C_S + C_H + C_{GH}} \Delta \phi CL$$

According to the Equation of the electric charge, the disparities in the electric charge quantity $\Delta Q_{clamp}$ in the clamp phase, due to the different threshold voltages, $V_{th1}$ and $V_{th2}$, of the column-selecting MOS switch 14 are shown in the following Equation.

[Equation 15]

$$\Delta Q_{Clamp} = Q_A(V_{th1}) - Q_A(V_{th2}) + Q_B(V_{th1}) - Q_B(V_{th2})$$

$$= \left( \frac{\alpha C_S C_{GH}}{C_S + C_H + C_{GH}} - \frac{C_S C_{GSH}}{C_S + C_{GSH}} \right) \Delta V_{th}$$

$$\Delta V_{th} = V_{th1} - V_{th2}$$

Next, the disparity in the electric charge quantity in the horizontal output phase will be considered. FIG. 9A and 9B each is a diagram for explaining the disparity in the electric charge quantity in the horizontal output phase. FIG. 10A is a circuit diagram of the part which affects the electric charge quantity that flows into the sampling capacitor $C_{SH}$ in the horizontal output phase. FIG. 10B is a diagram showing the waveform of the column-selecting pulse ΦH in the horizontal output phase.

The electric charges QA $(V_{th})$ and QB $(V_{th})$ which flow into the sampling capacitor $C_{SH}$ respectively in the A period and the B period as shown in FIG. 10B are shown in the following Equations.

[Equation 16]

$$Q_A(V_{th}) = Q_{A\text{-}SH}(V_{th}) + Q_{A\text{-}H}(V_{th})$$

$$Q_{A\text{-}SH}(V_{th}) = \frac{(C_{SH}+C_{GS})C_{GSH}}{C_{SH}+C_{GS}+C_{GSH}} V_{th}$$

$$Q_{A\text{-}H}(V_{th}) = \frac{C_H C_{GDH}}{C_H + C_{GDH}} V_{th}$$

$$Q_B(V_{th}) = \frac{(C_{SH}+C_{GS}+C_H)C_{GH}}{C_{SH}+C_{GS}+C_H+C_{GH}} (V_{DD} - V_{th})$$

According to the above Equations of the electric charge, the disparities in the electric charge quantity $\Delta Q_{HOUT}$ in the horizontal output phase caused by the different threshold voltages $V_{th1}$ and $V_{th2}$ in the column-selecting MOS switch M14 are shown in the following Equation.
[Equation 17]

$$\Delta Q_{Hout} = Q_A(V_{th1}) - Q_A(V_{th2}) + Q_B(V_{th1}) - Q_B(V_{th2})$$

$$= \left( \frac{(C_{SH}+C_{GS})C_{GSH}}{C_{SH}+C_{GS}+C_{GSH}} + \frac{C_H C_{GDH}}{(C_H+C_{GDH})} - \frac{(C_{SH}+C_{GS}+C_H)C_{GH}}{C_{SH}+C_{GS}+C_H+C_{GH}} \right) \Delta V_{th}$$

Accordingly, the disparities in the electric charge quantity $\Delta Q$ which combines the disparities in the electric charge quantity in the clamp phase and the horizontal output phase should be zero.
**[Equation 18]**

$$\frac{\Delta Q}{\Delta V_{th}} = \frac{C_{SH}+C_{GS}}{C_{SH}+C_{GS}+C_{CL}} \frac{\Delta Q_{Clamp}}{\Delta V_{th}} + \frac{\Delta Q_{Hout}}{\Delta V_{th}}$$

$$\approx \frac{C_{SH}}{C_{SH}+C_{CL}} \left\{ \alpha \frac{C_S}{C_S+C_H} C_{GH} - C_{GSH} \right\} +$$

$$C_{GSH} + C_{GDH} - C_{GH}$$

As a condition where the disparities in the electric charge quantity $\Delta Q$ become zero, the following a is derived.
**[Equation 19]**

$$\alpha = \frac{C_S+C_H}{C_S} \left( \frac{C_{SH}+C_{CL}}{C_{SH}} C_{GOH} + C_{GSH} \right) \frac{1}{C_{GH}}$$

As described above, according to this embodiment, (i) the ratio of capacitance values of the clamp capacitor $C_{CL}$ and the sampling capacitor $C_{SH}$ is a fixed value determined by each unit capacity of the sampling MOS switch M12, and (ii) the bias voltage VHB applied to the horizontal signal line is changed in synchronization with the clamp pulse ΦCL, so as to effectively remove or control the longitudinal fixed pattern noise caused by the non-uniformity of the column CDS circuit.
In this embodiment, the bias voltage VHB applied to the horizontal signal line is changed in synchronization with the clamp pulse ΦCL. In the case where the column-selecting pulse ΦHn is outputted at the same timing as the clamp pulse ΦCL, during the horizontal blanking period HBLK, the bias voltage VHB may be changed in synchronization with the column-selecting pulse ΦHn outputted during the horizontal blanking period HBLK. In other words, if the bias voltage is modulated in synchronization with the signal which controls the column-selecting MOS switch M14 from ON to OFF in the clamp phase, the modulation signal may be either the clamp pulse ΦCL or the column-selecting pulse ΦHn.

(Second Embodiment)

Next, the second embodiment of the present invention will be described.

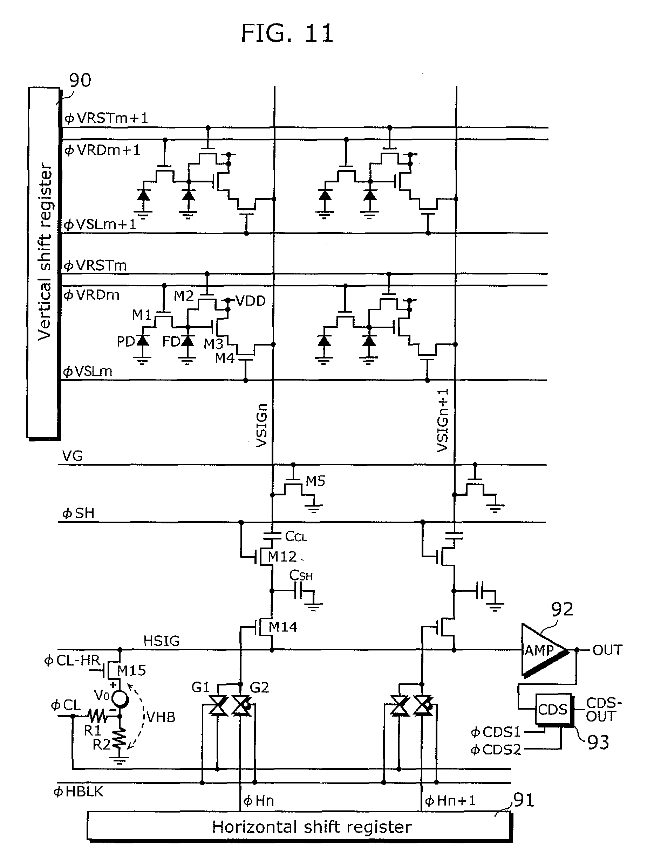

FIG. 11 is a circuit diagram of the solid-state image pickup device in the second embodiment of the present embodiment. Like the first embodiment, the solid-state image pickup device according to this embodiment basically includes an imaging device and a column CDS circuit. However, the connection of the column CDS circuit is different from the first embodiment. The difference from the first embodiment will be mainly described as follows.
The input of the column CDS circuit is the drain of the sampling MOS switch M12, and the clamp capacitor $C_{CL}$ is connected to the source side. The sampling capacitor $C_{SH}$ is connected in series to the clamp capacitor $C_{CL}$, and the source of the column-selecting MOS switch is connected to the node. The drain of the column-selecting MOS switch is equivalent to the output of the column CDS circuit, and connected to the horizontal signal line HSIG. A clamp and horizontal signal line reset bias circuit is connected to the horizontal signal line HSIG. The clamp and horizontal signal line reset bias circuit includes a bias voltage VHB and a clamp and horizontal signal line reset MOS switch.

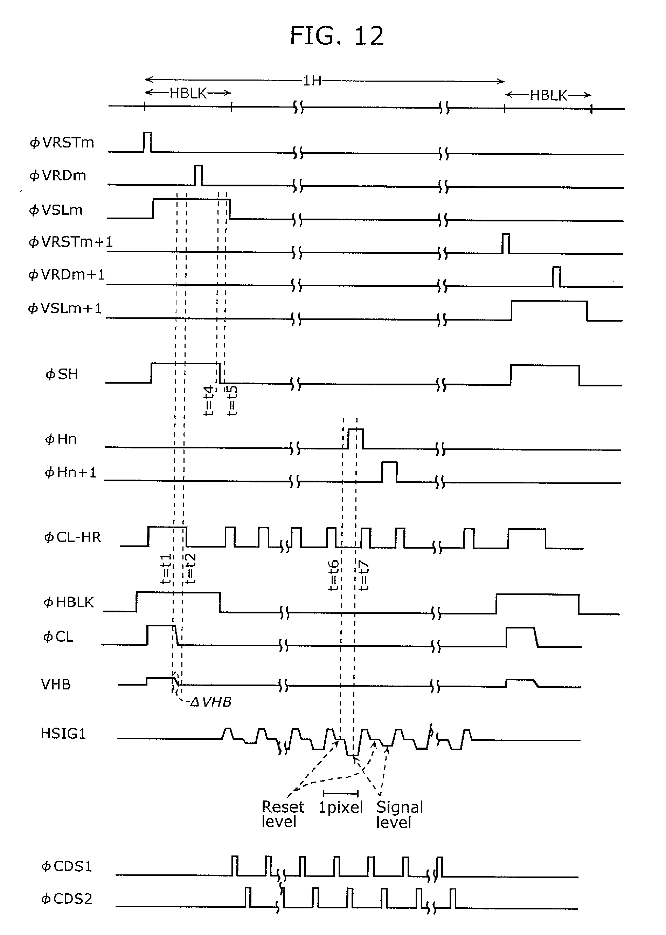

FIG. 12 is a timing chart showing the operations of the solid-state image pickup device as shown in FIG. 11. The operational difference from the first embodiment is as follows: the column signal line VSIGn is not capacitative when seen from the sampling MOS switch M12, and the signal output (voltage source) from the pixel is seen directly; thus, in order to create the effect of the capacity $C_I$ as shown in FIG. 8A, the column signal line VSIGn is made into a floating state in the sampling phase, and the parasitic capacity of the column signal line VSIGn is used as the capacity $C_I$. Therefore, unlike the first embodiment, as shown in FIG. 12, before lowering the sampling pulse ΦSH (from t=t4 to t=t5) in the sampling phase, in order to electrically float the column signal line VSIGn, the row-selecting pulse ΦVSLm and the gate voltage of the MOS transistor M5 which is the pixel load are lowered (from t=t3 to t=t4). The other operations are the same as those of the first embodiment.

The circuit configuration and operations of the column CDS circuit according to the second embodiment are slightly different from those of the first embodiment. Thereby, (i) the Equation for providing the capacity of the clamp capacitor $C_{CL}$ and the sampling capacitor $C_{SH}$, and (ii) the coefficient a for providing the voltage change of the bias voltage VHB in the clamp phase (from t=$t_1$ to t=t2) are shown as follows. The derivation methods for these values are the same as the first embodiment.

[Equation 20]

$$\frac{C_{SH}C_{CL}}{C_V(C_{SH}+C_{CL})} = \frac{C_{GS}}{C_{GO}+C_{GD}}$$

$$\Delta VHB = \alpha \, \frac{C_{GH}}{C_S+C_H+C_{GH}} \, \Delta \phi H$$

$$\alpha = \frac{C_S+C_H}{C_S} \left( \frac{C_{SH}+C_{CL}}{C_{SH}} C_{GOH}+C_{GSH} \right) \frac{1}{C_{GH}}$$

where.

$C_S = C_{SH} + C_{CL} + C_G$
$C_G = C_{GS} + C_{GO} + C_{GD}$
$C_{GH} = C_{GSH} + C_{GOH} + C_{GDH}$

The left side in the relational Equation of the capacity of the clamp capacitor $C_{CL}$ and the capacity of the sampling capacitor $C_{SH}$ is equivalent to the ratio between (i) a total capacity at the time when the clamp capacitor $C_{CL}$ is connected in series to the sampling capacitor $C_{SH}$ and (ii) the capacity $C_V$ of the column signal line VSIG. Thereby, the ratio between (i) a capacity when the clamp capacitor $C_{CL}$ is connected in series to the sampling capacitor $C_{SH}$ and (ii) the capacity of the column signal line VSIG should be a fixed value determined by each unit capacity of the sampling MOS switch M12.

As described above, according to this embodiment, (i) the relation between the capacitance value of the clamp capacitor $C_{CL}$ and the capacitance value of the sampling capacitor $C_{SH}$ is fixed, (ii) the column signal line VSIGn is electrically floated in the sampling phase, (iii) the bias voltage VHB applied to the horizontal signal line is modulated in synchronization with the clamp pulse ΦCL, so as to effectively remove or control the longitudinal fixed pattern noise caused by the non-uniformity of the column CDS circuit.

(Third Embodiment)

Next, the third embodiment according to the present invention will be described.

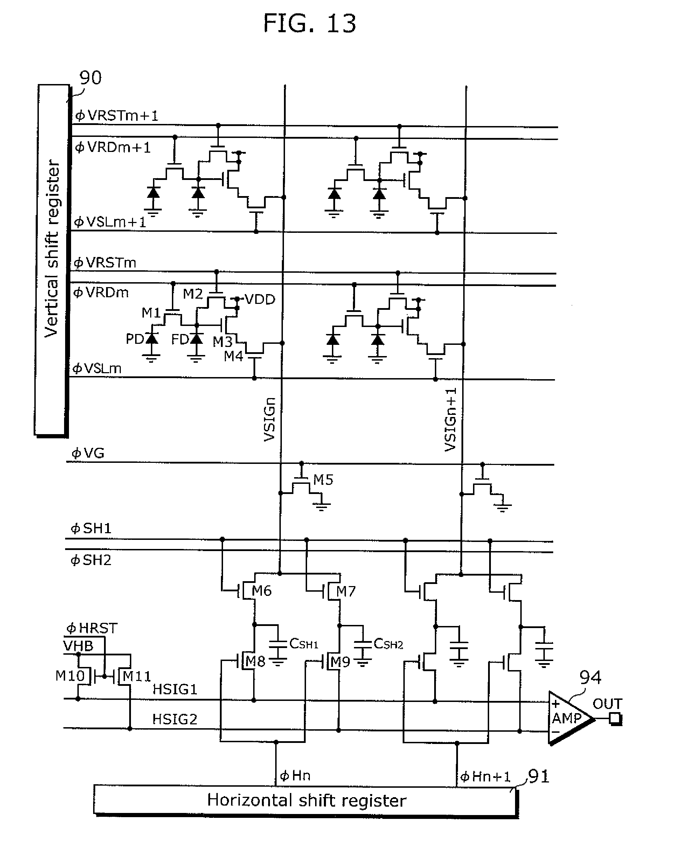

FIG. 13 is a circuit diagram of the solid-state image pickup device according to the third embodiment of the present invention. The solid-state image pickup device includes, per column signal line VSIGn, in stead of the CDS circuit in the first embodiment, two sampling circuits ((i) a sampling circuit including a sampling MOS switch M6, a column-selecting MOS switch M8, and a sampling capacitor $C_{SH1}$, and (ii) a sampling circuit including a sampling MOS switch M7, a column-selecting MOS switch M9, and a sampling capacitor $C_{SH2}$). Moreover, in stead of the output circuits 92 and 93 in the first embodiment, a differential AMP 94 connected to two horizontal signal lines, HSIG1 and HSIG2 is included.

The solid-state image pickup device is different from the correlated double sampling in which the first pixel signal from the imaging device (signal from the reset floating diffusion FD) and the second pixel signal (signal from the floating diffusion FD after the electric charge of the photodiode PD is transferred) are sampled in the same sampling circuit. The solid-state image pickup device is a circuit which realizes a method for removing the fixed pattern noise of the pixel by (i) sampling the first and second pixel signals in different sampling circuits, (ii) outputting the sampled first and second pixel signals respectively to the independent two horizontal signal lines HSIG1 and HSIG2, and (iii) providing the sampled first and second pixel signals to the inverse input and non-inverse input of the differential AMP 94.

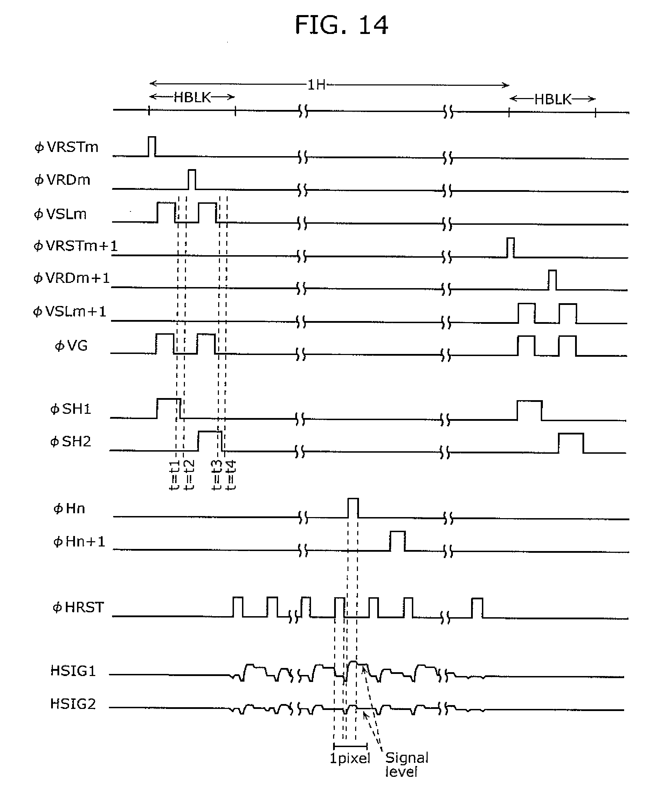

FIG. 14 is a timing chart showing operations of the solid-state image pickup device as shown in FIG. 13. In the sampling phase (t=t1 tot2 and t3 tot4), through the same method as those of the second embodiment, the disparities in the electric charge quantity in the sampling capacitor are removed. In other words, the ratio between the sampling capacitor $C_{SH}$ capacity and the column signal line VSIG capacity $C_V$ is a fixed value determined by each unit capacity of the sampling switches M6 and M7 as shown in the following Equation, and the column signal line VSIGn is floated in the sampling phase, so as to execute the operation as the capacitive input.

$$[\text{Equation 21}]$$

$$\frac{C_{SH}}{C_V} = \frac{C_{GS}}{C_{GO}+C_{GD}}$$

The clamp phase does not exist in this solid-state image pickup device. Thus, in the horizontal output phase, as shown in the timing chart in FIG. 14, in order to remove the electric charge flowing from the column-selecting MOS switches M8 and M9, after the horizontal signal lines HSIG1 and HSIG2 are reset in the head of one pixel period by the horizontal signal line reset signal ΦHRST, the column-selecting pulse ΦHn is outputted in the middle of one pixel period, so as to turn ON the column-selecting MOS switches M8 and M9 temporarily. Immediately after the column-selecting MOS switches M8 and M9 are turned OFF, the signals in the horizontal signal lines HSIG1 and HSIG2 are used as video signals. Thereby, the secondary longitudinal fixed pattern noise generated in the column-selecting MOS switch is removed.

As described above, according to this embodiment, (i) the ratio between the capacity of the sampling capacitor $C_{SH}$ and the capacity $C_V$ of the column signal line VSIG Cv is a fixed value; (ii) the column signal line VSIGn is electrically floated in the sampling phase; (iii) after the horizontal signal line is reset during one pixel period, the column-selecting MOS switch is temporarily turned ON, and (iv) the signals in the horizontal signal line immediately after the OFF state of the column-selecting MOS switch are outputted as image signals, so as to effectively remove or control the longitudinal fixed pattern noise caused by the non-uniformity of the sampling circuit.

**Industrial Applicability**

The present invention is utilized as a solid-state image pickup device used for an image input device such as a video camera and a digital still camera, and in particular, as a solid-state image pickup device and the like including a sampling circuit which reads out signals from a MOS or CMOS imaging device.

**Claims**

**1.** A solid-state image pickup device comprising a sampling circuit for sampling a signal from a photodiode, wherein said sampling circuit includes:

a clamp capacitor which is a capacitor for transmitting only an AC component of the signal;
a sampling capacitor which is a capacitor for holding the signal transmitted via said clamp capacitor; and
a sampling Metal Oxide Semiconductor (MOS) switch which is a MOS transistor for transmitting the signal to said sampling capacitor, or blocking the transmission; and
a relation between a capacity of said clamp capacitor and a capacity of said sampling capacitor is determined by the capacity unique to said sampling MOS switch.

**2.** The solid-state image pickup device according to Claim 1,

wherein said sampling MOS switch is connected in series between said clamp capacitor and said sampling capacitor, and

a ratio between the capacity of said sampling capacitor and the capacity of said clamp capacitor is a fixed value determined by the capacity unique to said sampling MOS switch.

**3.** The solid-state image pickup device according to Claim 1,
wherein said clamp capacitor is connected in series between said sampling MOS switch and said sampling capacitor, and

a ratio between (i) a total capacity in the series connection between said sampling capacitor and said clamp capacitor and (ii) a capacity of a column signal line, which transmits the signal, is a fixed value determined by the capacity unique to said sampling MOS switch.

**4.** The solid-state image pickup device according to Claim 2 or Claim 3,
wherein the fixed value is approximately equivalent to a ratio between a gate-source capacity and a gate capacity of said sampling MOS switch.

**5.** The solid-state image pickup device according to Claim 1,
wherein said sampling circuit further includes:

a column-selecting MOS switch for turning ON or OFF a connection between said sampling capacitor and an output line, and
a bias voltage application circuit for applying a bias voltage to the output line, and
said bias voltage application circuit changes the bias voltage applied to the output line in synchronization with a control signal for turning turns said column-selecting MOS switch from ON to OFF.

**6.** The solid-state image pickup device according to Claim 5,
wherein said bias voltage application circuit changes the bias voltage based on a proportional coefficient, that is, the value determined by the capacity of said sampling capacitor; a capacity of said clamp capacitor; a capacity between the output line and the reference potential; and a capacity unique to said column-selecting MOS switch.

**7.** A solid-state image pickup device comprising a sampling circuit for sampling a signal from a photodiode, said device comprising
two of said sampling circuits per a column of photodiodes,
wherein said two sampling circuits are connected to each other in parallel so that a column signal line, which transmits a signal from the column of photodiodes, is a common input,
said sampling circuit includes:

a sampling capacitor which is a capacitor for holding the signal; and
a sampling Metal Oxide Semiconductor (MOS) switch which is a MOS transistor for transmitting the signal to said sampling capacitor, or blocking the transmission; and
a ratio between a capacity of said sampling capacitor and a capacity of the column signal line is a fixed value determined by a capacity unique to said sampling MOS switch.

**8.** The solid-state image pickup device according to Claim 7,
wherein the fixed value is approximately equivalent to a ratio between a gate-source capacity and a gate capacity of said sampling MOS switch.

**9.** The solid-state image pickup device according to Claim 7,
wherein said sampling circuit further includes a column-selecting MOS switch which is a MOS switch for turning ON or OFF a connection between said sampling capacitor and an output line, and when the signal held in said sampling capacitor is outputted to the output line, the column-selecting MOS switch is brought into a conduction state from a non-conduction state, then brought into the non-conduction state again.

**10.** A sampling circuit for sampling a signal from a photodiode, said circuit comprising:

a clamp capacitor which is a capacitor for transmitting only an AC component of the signal;
a sampling capacitor which is a capacitor for holding the signal transmitted via said clamp capacitor; and
a sampling MOS switch which is a MOS transistor for transmitting the signal to said sampling capacitor or blocking the transmission,

wherein a relation between a capacity of said clamp capacitor and a capacity of said sampling capacitor is determined by a capacity unique to said sampling MOS switch.

11. A sampling circuit for sampling a signal from a photodiode, said circuit comprising:

a sampling capacitor which is a capacitor for holding the signal; and
a sampling MOS switch which is a MOS transistor for transmitting the signal to said sampling capacitor or blocking the transmission,

wherein the ratio between a capacity of said sampling capacitor and a capacity of a column signal line which transmits a signal from the photodiode is a fixed value determined by a capacity unique to said sampling MOS switch.

# FIG. 1

# FIG. 2

## FIG. 3

(a)

(b)

MOS switch switched ON

(c)

MOS switch switched OFF

EP 1 770 990 A1

## FIG. 4A

## FIG. 4B

FIG. 5A

FIG. 5B

FIG. 5C

# FIG. 6

# FIG. 7

FIG. 8A

FIG. 8B

A period

FIG. 8C

B period

$C_G = C_{GS} + C_{GO} + C_{GD}$

FIG. 8D

FIG. 9A

φCL

φSH

G

C<sub>G</sub>

D    S

VSIG

M14

C<sub>CL</sub>

VHB

C<sub>SH</sub>

FIG. 9B

A period

VDD

φCL

V<sub>in</sub>

GND(0V)

B period

FIG. 10A

φH

φSH

G

C<sub>GS</sub>

D    S

M14

C<sub>H</sub>

C<sub>SH</sub>

FIG. 10B

B period

φH

VDD

V<sub>in</sub>

GND (0V)

A period

# FIG. 11

FIG. 12

# FIG. 13

EP 1 770 990 A1

# FIG. 14

## INTERNATIONAL SEARCH REPORT

| | International application No. |
| --- | --- |
| | PCT/JP2005/010384 |

**A. CLASSIFICATION OF SUBJECT MATTER**
Int.Cl⁷ H04N5/335

According to International Patent Classification (IPC) or to both national classification and IPC

**B. FIELDS SEARCHED**

Minimum documentation searched (classification system followed by classification symbols)
Int.Cl⁷ H04N5/335

Documentation searched other than minimum documentation to the extent that such documents are included in the fields searched
Jitsuyo Shinan Koho          1922-1996   Jitsuyo Shinan Toroku Koho   1996-2005
Kokai Jitsuyo Shinan Koho    1971-2005   Toroku Jitsuyo Shinan Koho   1994-2005

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 1997/007628 A1  (Toshiba Corp.),<br>27 February, 1997 (27.02.97),<br>Page 12, line 18 to page 26, line 23; Figs. 3,<br>21, 25<br>& US 6300978 B1 | 1-11 |
| A | JP 2000-350106 A  (Sharp Corp.),<br>15 December, 2000 (15.12.00),<br>Full text; Figs. 1 to 20<br>& GB 2351803 A | 1-11 |
| A | JP 10-173997 A  (Sharp Corp.),<br>28 June, 1998 (28.06.98),<br>Full text; Figs. 1 to 11<br>& US 6166767 A | 1-11 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 08 September, 2005 (08.09.05) | 27 September, 2005 (27.09.05) |

| Name and mailing address of the ISA/<br>Japanese Patent Office | Authorized officer |
| --- | --- |
| Facsimile No. | Telephone No. |

Form PCT/ISA/210 (second sheet) (January 2004)

**EP 1 770 990 A1**

**REFERENCES CITED IN THE DESCRIPTION**

**Patent documents cited in the description**

- JP 10173997 A